# EUROPÄISCHE PATENTSCHRIFT

(11) **EP 0 817 570 B1**
(45) Veröffentlichungstag und Bekanntmachung des Hinweises auf die Patenterteilung: **20.10.1999**
(21) Anmeldenummer: 96910943.8
(22) Anmeldetag: 29.03.1996
(51) Int. Cl.: A22C 11/08, A22C 11/02

(54) **VERFAHREN UND VORRICHTUNG ZUM HERSTELLEN VON PORTIONIERTER WURST**
METHOD AND DEVICE FOR PRODUCING PORTIONED SAUSAGE
PROCEDE ET DISPOSITIF DE FABRICATION DE SAUCISSE EN PORTIONS

(30) Priorität: 29.03.1995 DE 19511431; 19.05.1995 DE 19517995
(43) Veröffentlichungstag der Anmeldung: 14.01.1998
(73) Patentinhaber: VEMAG MASCHINENBAU GmbH, 27283 Verden (DE)
(72) Erfinder: NICOLAISEN, Bernd, D-27283 Verden (DE); MATTHIES, Lothar, D-27299 Langwedel (DE)
(74) Vertreter: Eisenführ, Speiser & Partner
(86) Internationale Anmeldenummer: EP9601390
(87) Internationale Veröffentlichungsnummer: WO9629878

(56) Entgegenhaltungen:
- EP-A- 0 218 790
- BE-A- 670 061
- DE-A- 1 632 091
- DE-A- 3 625 191
- FR-A- 1 299 087
- FR-A- 2 620 902
- GB-A- 858 343
- US-A- 2 999 270

## Beschreibung

Die Erfindung betrifft ein Verfahren zum Herstellen von portionierter Rohwurst, Brühwurst oder dergleichen mit einer vorgebbaren Körnung der Wurstmasse, bei dem das Brät, die Wurstmasse oder dergleichen in eine Füllmaschine gegeben und dort von einer Förderpumpe verdichtet wird. Die Erfindung betrifft weiterhin eine Vorrichtung zum Herstellen von portionierter Rohwurst, Brühwurst oder dergleichen mit einer vorgebbaren Körnung der Wurstmasse, mit einer Förderpumpe, einer die Förderpumpe treibenden Welle und einem Füllrohr, welche insbesondere zum Ausführen des erfindungsgemäßen Verfahrens geeignet ist. Eine solche Füllmaschine ist in der DE-A1-36 35 191 gezeigt.

Bei der Herstellung von Wurst werden zunächst die benötigte Fleischmenge und die sonstigen Zutaten in einen Kutter gegeben und dort fein zerkleinert und vermischt. Die so gewonnene Wurstmasse wird dann beispielsweise in den Vorratstrichter der erwähnten, bekannten Wurstfüllmaschine gefüllt, mittels einer Zubringereinrichtung deren Förderpumpe zugeführt und von dieser unter Druck durch ein Füllrohr hindurch in den Wurstdarm abgegeben, der auf das Füllrohr aufgerafft und von der Wurstmasse nach und nach abgezogen wird.

Zum Portionieren der Wurst wird die Förderung der Wurstmasse dabei üblicherweise unterbrochen. Zwischen zwei Fördertakten wird der Darm maschinell oder auch manuell abgedreht oder durch Clippen in die einzelnen Würste unterteilt.

Das Portionieren geschieht entweder in Form einer Längenportionierung der Würste oder in einer Volumenportionierung. Letzteres ist der Regelfall und ist bei den,

Einsatz getakteter Pumpem möglich. Eine Längenportionierung läßt bei konstanter Wurst-Länge unterschiedliche Volumina zu und Ist deshalb wegen des unterschiedlichen Wertes der einzelnen, gleich langen Würste unerwünscht.

Der Wunsch, den Feinheitsgrad und die Homogenität der Wurstmasse bei der Herstellung von Hackfleisch zu verbessern, um einerseits ein besser aussehendes Produkt und andererseits verbesserte Reifungseigenschaften zu erzielen, hat in der Praxis dazu geführt, daß man die gekutterte Wurstmasse gelegentlich zusätzlich gewolft hat. Ein hierfür verwendbares Gerät ist in der FR-PS 1.299.087 offenbart. Wegen der Gefahr des Verschmierens der Wurstmasse konnte der Wolf jedoch nicht in Arbeitsrichtung vor der Füllmaschine angeordnet werden. In einer aus der Praxis bekannten Anordnung wird deshalb der Ausgang der Füllmaschine mit dem Eingang eines Trennwolfes, also einer Spezialausführung eines Wolfes verbunden, der im Zuge der Feinstzerkleinerung alle schwer passierbaren und vom Fördermesser des Wolfes angeschabten Materialien wie Sehnen, Knorpel und Knochensplitter ausscheidet. Mit diesem Stand der Technik, der primär zur Herstellung von Hackfleisch eingesetzt wird, war aber das für die Rohwurstherstellung erwünschte und notwendige exakte Portionieren nicht möglich.

Der Erfindung liegt die Aufgabe zugrunde, eine Rohwurst mit bestimmbarer feiner Körnung, aber ohne Beeinträchtigung der bisher schon erreichten Portioniergenauigkeit herzustellen.

Das diese Aufgabe lösende Verfahren zum Herstellen von portionierter Rohwurst, Brühwurst oder dergleichen mit einer vorgebbaren Körnung der Wurstmasse, bei dem das Brät, die Wurstmasse oder dergleichen in eine Füllmaschine gegeben und dort von einer Förderpumpe verdichtet wird, besteht erfindungsgemäß darin, daß die Wurstmasse nach dem Verlassen der Förderpumpe unmittelbar dem Schneidsatz eines Wolfes zugeführt und von diesem auf die gewünschte Endkörnung zerkleinert wird, und daß der Antrieb des Schneidsatzes zum Portionieren der Wurstmasse analog zum Antrieb der Förderpumpe der Fülimaschine unterbrochen wird.

Bei der Durchführung dieses Verfahren läßt sich insbesondere eine exzellente Rohwurst herstellen, ohne daß ein merkliches Verschmieren der Wurstmasse zu beobachten ist und ohne daß die Portioniergenauigkeit gegenüber dem Stand der Technik leidet. Vor allem hat sich überraschend gezeigt, daß der erfindungsgemäß mögliche geringe Abstand zwischen Pumpenauslaß und Schneidsatz des Wolfes die Qualität des fertigen Produktes stark fördert. Die Endkörnung der Wurstmasse kann hierbei fast beliebig vorgegeben werden; die Ausgangswurstmasse mit einer gröberen Körnung als derjenigen der Rohwurst wird bei dem erfindungsgemäßen Verfahren in die Füllmaschine gegeben und von dem Schneidsatz des Wolfes - je nach Lochgrößen - dann auf die gewünschte Endkörnung zerkleinert.

Die Förderleistungen der Füllmaschine und des Schneidsatzes müssen bei dem erfindungsgemäßen Verfahren aufeinander abgestimmt sein. Gemäß einer besonders bevorzugten Ausführungsform des erfindungsgemäßen Verfahrens wird deshalb der Druck der Wurstmasse zwischen Füllmaschine und Schneidsatz gemessen, um die Förderleistung so zu regeln, daß der Druck der Wurstmasse innerhalb vorgegebener Schwellwerte liegt. Die Druckmessung erfolgt vorteilhafterweise kontinuierlich; je nach verwendeter Regelung kann es aber auch vorteilhaft sein, in vorbestimmten Zeitabstanden diskrete Druckmessungen durchzuführen.

Die die Aufgabe lösende Vorrichtung zum Herstellen von portionierter Rohwurst, Brühwurst oder dergleichen mit einer vorgebbaren Körnung der Wurstmasse, mit einer Förderpumpe, einer die Förderpumpe treibenden Welle und einem Füllrohr zeichnet sich erfindungsgemäß dadurch aus, daß sie einen Schneidsatz zwischen dem Auslaß der Förderpumpe und dem Füllrohr aufweist, dessen schneidende Elemente mit der die Förderpumpe treibenden Welle gekoppelt sind.

Durch die direkte Kopplung der die Förderpumpe treibenden Welle und dem Schneidsatz wird gewährleistet, daß der Schneidsatz in den Portionierpausen analog der Förderpumpe der Wurstfüllmaschine unterbrochen wird. Nur hierdurch kann zuverlässig gewährleistet werden, daß die Portioniergenauigkeit nicht schlechter als bei den im Stand der Technik bekannten Vorrichtungen ist.

Bevorzugt wird bei dieser Vorrichtung die Verwendung einer Wurstfüllmaschine, deren Förderpumpe eine Doppelspindelpumpe ist und bei der eine der beiden Spindeln an ihrem druckseitigen Ende einen zentralen Wellenansatz aufweist, der durch den Pumpenauslaß hinausragt und an den Schneidsatz angekoppelt ist. Konstruktiv besonders einfach und damit günstig herzustellen ist eine solche Vorrichtung, bei der der Schneidsatz in axialer Fortsetzung der einen Spindel der Förderpumpe angeordnet ist.

Der besondere Vorteil des Einsatzes einer Verdrangerpumpe, vorteilhafterweise einer Doppelspindelpumpe als Förderpumpe ergibt sich im Zusammenhang mit einen Aspekt der Erfindung daraus, daß es nur mit einer Doppelspindelpumpe - nicht aber mit einem einfachen Schraubenförderer - möglich ist, hinter dem Auslaß der Förderpumpe einen definierten Druck aufzubauen. Ein Schraubenförderer mit einer einfachen Förderspindel weist nämlich im Gegensatz zu einer Doppelspindelpumpe keine voneinander getrennten und gegeneinander abgedichteten Förderkammern auf, so daß bei einem einfachen Schneckenförderer Ein- und Auslaß etwa auf dem gleichen Druckniveau liegen. Dem Fachmann sind neben Doppelspindelpumpen selbstverständlich auch andere Verdrängerpumpen bekannt, mit denen denen sich eine definierte Druckdifferenz zwischen Ein- und Auslaß erzielen läßt, nämlich beispielsweise Zahnradpumpen, Rootspumpen, Flügelpumpen und dergleichen.

Zur Anpassung unterschiedlicher Förderleistungen des Schneidsatzes einerseits und der Förderpumpe andererseits kann es vorteilhaft sein, zwischen Schneidsatz und Förderpumpe ein Getriebe anzuordnen, das mit der die Förderpumpe treibenden Welle gekoppelt ist.

Die Bestandteile der Wurstmasse lassen sich ohne Qualitätsbeeinträchtigung nur innerhalb vorbestimmter Druckwerte verarbeiten. Der höchstzulässige Druck für Rindfleisch beträgt beispielsweise 15 bis 20 Bar, für Schweinefleisch 11 bis 17 Bar und für Fett 5 bis 8 Bar. Da die Wurstmasse im allgemeinen aus einer Mischung dieser drei Bestandteile besteht, kann anhand der Zusammensetzung der Wurstmasse der höchstmögliche Druck errechnet werden, der ohne Qualitätsbeeinträchtigung auf die Wurstmasse ausgeübt werden kann. Besonders bevorzugt wird daher ein Drucksensor in der Förderstrecke zwischen Förderpumpe und Schneidsatz angeordnet, der den Druck der Wurstmasse hier mißt. Die Messung sollte vorteilhafterweise kontinuierlich erfolgen; alternativ ist es jedoch auch möglich, in diskreten Schritten einzelne Druckmessungen vorzunehen. Die von dem Drucksensor erfaßten Druckwerte werden besonders bevorzugt einer Regelungseinrichtung zugeführt, die den Antrieb der den Schneidsatz treibenden Welle so regelt, daß die Druckwerte während der Wurstherstellung nur innerhalb eines vorbestimmten Intervalls - insbesondere unterhalb der höchstzulässigen Druckwerte liegen. Durch diese Regelungseinrichtung ist es beispielsweise möglich, vor dem Wurstherstellungsprozeß die Bestandteile der Wurstmasse einzugeben und durch die Regelungseinrichtung dann sicherzustellen, daß die Druckwerte automatisch innerhalb für günstig erachteter Schwellwerte liegt.

Bei einer Vorrichtung mit einer Vakuumfüllmaschine, deren Förderpumpe eine Spindelpumpe ist, sind die Schneidelemente des Wolfes und die Förderpumpe bevorzugt so gewählt, daß der Wurstmassen-Durchsatz der Schneidelemente bei einer vorgegebenen Druckbeaufschlagung der Wurstmasse am Einlaß der Schneidelemente größer ist als das Drehvolumen der Förderkurven der Förderpumpe. Das Drehvolumen ist hierbei dasjenige Volumen, das die Förderpumpe bei einer Wellenumdrehung fördert. Es hat sich nämlich gezeigt, daß anderenfalls durch die zu hohen Drücke in der Spindelpumpe es zu Schmiereffekten und Rohstoffzerstörung kommen kann, die die Qualität des Herstellungsproduktes beeinträchtigen. Zur Anpassung des Wurstmassen-Durchsatzes der Schneidelemente an das Drehvolumen der Förderkurven können die Lochscheiben der Schneidelemente ausgewechselt und dem Drehvolumen angepaßt werden. Bei einem Wurstmassendruck von 5 bis 20 Bar am Einlaß des Wolfes wurde ein Wurstmassendurchsatz von 50 bis 100g pro Minute und Bohrung bei Lochscheiben mit 2mm-Löchern festgestellt, bei Lochscheiben mit 3mm-Löchern ein Wurstmassen-Durchsatz von 80 bis 180g pro Minute und Bohrung, bei einer Lochscheibe mit 4mm-Löchern schließlich wurden 250 bis 500g pro Minute und Bohrung gemessen. Eine Vergrößerung des Lochdurchmessers von 1 mm fuhrt also zu dem 2 bis 2 1/2-fachen Wurstmassen-Durchsatzes des Wolfes. Durch geeignete Wahl einer Lochscheiben-Kombination und einer entsprechenden Anzahl an Messerflügeln kann die erfindungsgemäße Vorrichtung an verschiedene Zusammensetzungen der Wurstmasse angepaßt werden. Als besonders vorteilhaft hat es sich erwiesen, daß die Schneidelemente mindestens zwei, In Förderrichtung beabstandete Lochscheiben aufweisen, vor und/oder hinter denen jeweils mindestens ein Schneidmesser des Schneidsatzes angeordnet ist.

Der Zwischenraum zwischen Förderpumpe und Schneidsatz ist vorteilhafterweise relativ klein gehalten, um die Rohstoffqualität zu erhalten. Besonders bevorzugt besitzt der Hohlraum zwischen Förderpumpe und Schneidsatz, durch den die Wurstmasse von dem Auslaß der Förderpumpe zum Einlaß des Schneidsatzes hindurchgepreßt wird, ein Volumen von drei bis acht Litern.

Vorteilhafterweise ist das Volumen des Hohlraumes veränderbar. Hierzu kann der Hohlraum beispielsweise aus mehreren, miteinander koppelbaren Abschnitten gebildet sein. Durch Herausnahme oder Einfügung von weiteren Abschnitten kann hierbei der Hohlraum je nach Bedarf verkleinert oder vergrößert werden. Die Vergrößerung des Hohlraumes kann beispielsweise durch Einfügen eines Zwischenstücks zwischen Hohlraum und Einlaß der Schneidelemente und/oder dem Auslaß der Förderpumpe und dem Hohlraum erfolgen.

Vorteilhafte Weiterbildungen der Erfindung sind durch die Merkmale der Unteransprüche gekennzeichnet.

Die Erfindung wird nachstehend unter Bezugnahme auf die Zeichnungen naher erläuter. Es zeigen:
- Fig. 1: einen Schnitt durch den Auslaßbereich einer Wurstfüllmaschine und
- Fig. 2: einen der Fig. 1 ähnlichen Schnitt mit einer am Auslaß der Wurstfüllmaschine angeordneten Abdreheinrichtung.

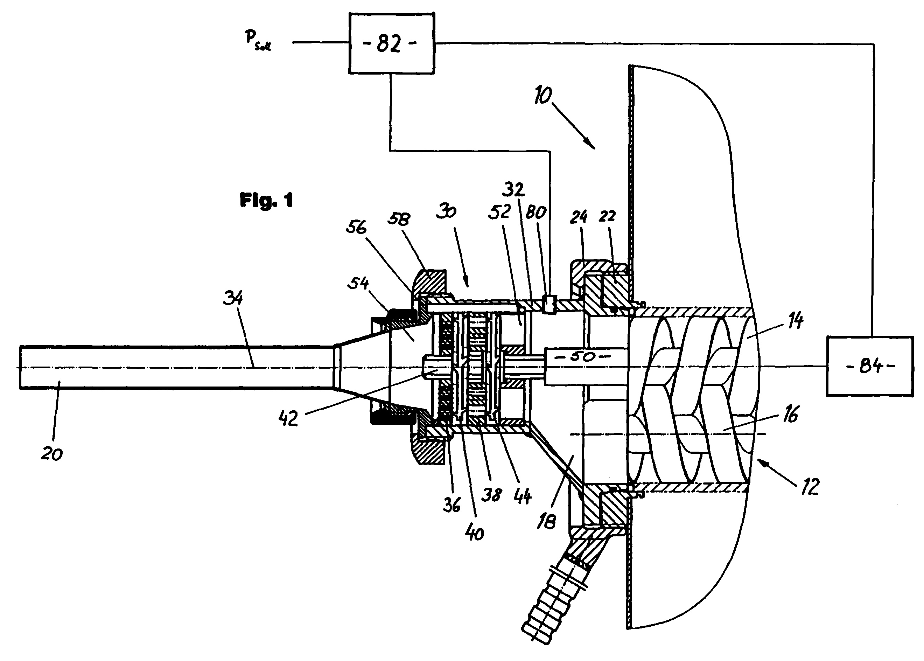

Fig. 1 zeigt von einer Vakuum-Wurstfüllmaschine 10 nur einen kleinen Ausschnitt. Die Wurstfüllmaschine weist in üblicher Weise eine Förderpumpe 12 auf, die im Ausführungsbeispiel eine Doppelspindelpumpe mit Spindeln (Förderkurven) 14, 16 ist. Am in der Zeichnung linken Ende der Förderpumpe 12 befindet sich deren Pumpenauslaß 18. Dargestellt in Fig. 1 ist weiterhin ein übliches Füllrohr 20 sowie ein mit einem Außengewinde versehener und fest mit der Füllmaschine 10 verbundener Ringflansch 22. Diesem Ringflansch ist eine Spannmutter 24 zugeordnet, mit deren Hilfe ein Füllrohr oder Zusätzgeräte funktional an den Pumpenauslaß 18 angeschlossen werden können.

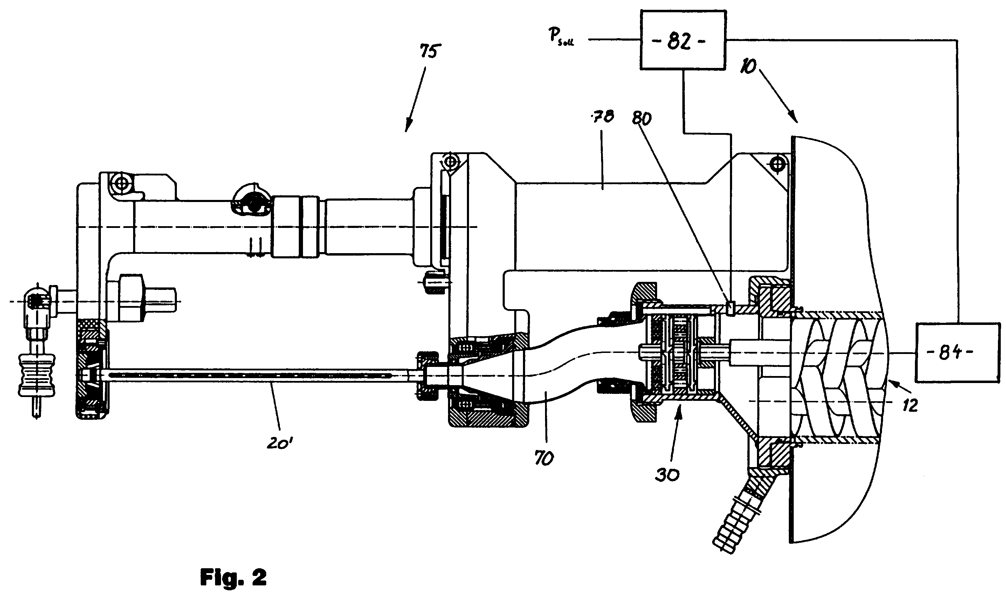

Im Ausführungsbeispiel gemäß den Fig. 1 und 2 ist unter Verwendung des Ringflansches 22 und der Spannmutter 24 das Gehäuse 32 eines Wolfs 30 mit der Füllmaschine 10 fest verbunden. Im Gehäuse 32 befinden sich in Richtung einer Mittelachse 34 beabstandet zwei für einen Wolf übliche, gehäusefest gelagerte Lochscheiben 36, 38, zwischen denen ein übliches rotierendes Schneidmesser 40 auf einer zur Achse 34 koaxialen Welle 42 befestigt ist. Zwischen dem Pumpenauslaß 18 und der Lochscheibe 38 des Wolfes 30 ist ein weiteres übliches rotierendes Schneidmesser 44 ebenfalls auf der Welle 42 gelagert, das mit der Lochscheibe 38 zusammenarbeitet.

Ausweislich der Fig. 1 und 2 stellt die Mittelachse 34 nicht nur die Achse des Wolfes 30, sondern gleichzeitig auch die Mittelachse der Spindel 14 der Förderpumpe 12 dar, so daß der Wolf 30 mit seiner Antriebswelle 42 für die Schneidmesser 40, 44 eine axiale Fortsetzung der Spindel 14 bildet. Mittels einer Verbindungswelle 50 sind die Spindel 14 und die Antriebswelle 42 des Wolfes 30 drehfest miteinander verbunden. Die Verbindungswelle 50 kann als Steckachse ausgeführt sein, die in einen zentralen Mitnehmer an der Stirnfläche der Spindel 14 einerseits und in einen entsprechenden Mitnehmer der Antriebswelle 42 eingesteckt ist; die Verbindungswelle 50 kann jedoch auch ein fester Bestandteil entweder der Spindel 14 oder der Antriebswelle 42 sein. Schließlich kann auch vorgesehen werden, daß die Spindel 14 einstückig die Verbindungswelle 50 und die Antriebswelle 42 beinhaltet. Es versteht sich jedoch, daß bei abweichender Lage der Drehachse der Förderpumpe ggf. ein Getriebe zwischen Pumpenwelle und Antriebswelle 42 geschaltet werden muß, oder daß es einer Umlenkung des Förderstroms bedarf, wenn Pumpenauslaß 18 und Wolf 30 eine vom bevorzugten Ausführungsbeispiel abweichende relative Lage haben.

Wie man in der Zeichnung gut erkennen kann, fördert die Förderpumpe 12 durch den Pumpenauslaß 18 hindurch auf allerkürzestem Weg direkt in den Eingangsbereich 52 des Wolfes 30. Die dort unter Druck stehende Wurstmasse wird durch die beiden Lochscheiben 36, 40 hindurch gefördert und dabei auf die gewünschte Körnigkeit gebracht. Die Wurstmasse gelangt dann durch einen Auslaß 54 des Wolfes 30 in das bereits erwähnte Füllrohr 20. Erkennbar ist, daß das Füllrohr 20 an seinem in der Zeichnung rechten Ende einen Flansch 56 aufweist, der mittels einer weiteren Spannmutter 58 fest mit dem Gehäuse 32 des Wolfes 30 verbunden wird.

Die Ausführungsform der Erfindung gemäß Fig. 2 unterscheidet sich von der vorstehend beschriebenen Ausführung nur dadurch, daß hier das einfache Füllrohr 20 ein über ein Zwischenrohr 70 an den Ausgang 54 des Wolfes 30 angeschlossenes Füllrohr 20' einer Portioniereinrichtung 75 ist, die in herkömmlicher und deshalb nicht besonders beschriebener Weise mit der Wurstfüllmaschine 10 gekoppelt ist und im Rahmen der vorliegenden Erfindung keine Sonderfunktion hat. Es sei deshalb nur erwähnt, daß das Füllrohr 20' in üblicher Weise zur Aufnahme eines gerafften Darmes ausgebildet und die Abdreheinrichtung am freien Ende des Füllrohrs 20' eine herkömmliche Darmbremse sowie die erforderlichen Abdrehmittel zum Abdrehen aufeinanderfolgender Würste aufweist.

Teil der Abdreheinrichtung 75 ist im vorliegenden Fall ein Distanzelement 78, welches den Raum überbrückt, der für den Wolf 30 und das Zwischenrohr 70 benötigt wird.

Sowohl in Fig. 1 als auch in Fig. 2 sind skizzenhaft die für eine Druckregelung erforderlichen Elemente eingezeichnet, nämlich ein Drucksensor 80, eine Regelungseinheit 82 und eine Antriebseinheit 84 für die Förderpumpe 12 und den Schneidsatz 40, 44.

Die Antriebseinheit ist mechanisch mit der Welle der Spindel 14 verbunden. Der Drucksensor 80 ist in die Wand des Gehäuses 32 eingebaut und mißt den Druck in der Förderstrecke zwischen der Förderpumpe 12 und dem Schneidsatz 40, 44. Der Drucksensor 80 ist elektrisch mit der Regelungseinheit 82 verbunden und stellt dieser ein dem gemessenen Druck ensprechendes elektisches Signal zur Verfügung. In der Regelungseinheit 82 wird der gemessene Druck mit einem voreingestellten Solldruck P_{Soll} oder Solldruckintervall verglichen. Je nach Diffenz zwischen dem gemessenen Druck und dem Solldruck oder der Lage des gemessen Drucks innerhalb oder außerhalb des Solldruckintervalls wird in der Regelungseinheit 82 eine entsprechnde Stellgröße für die Antriebseinheit 84 gebildet, also beispielsweise ein Drehzalsollwert für einen nachgeschalteten Drehzahlregeler des Antriebs oder eine ensprechende Steuerspannung. Die Stellgröße wird elektrisch von der Regelungseinheit 82 zur Antriebsheit 84 übertragen.

## Patentansprüche

1. Verfahren zum Herstellen von portionierter Rohwurst, Brühwurst oder dergleichen mit einer vorgebbaren Körnung der Wurstmasse, bei dem das Brät, die Wurstmasse oder dergleichen in eine Füllmaschine gegeben, dort von einer Förderpumpe verdichtet und nach dem Verlassen der Förderpumpe (12) unmittelbar dem Schneidsatz (40, 44) eines Wolfes zugeführt und von diesem auf die gewünschte Endkörnung zerkleinert wird, und bei dem der Antrieb (42, 50, 14) des Schneidsatzes (40, 44) zum Portionieren des Brätes, der Wurstmasse oder dergleichen analog zum Antrieb der Förderpumpe (12) der Füllmaschine (10) unterbrochen wird.

2. Verfahren nach Anspruch 1,
bei dem der Druck des Brätes, der Wurstmasse oder dergleichen zwischen Füllmaschine (10) und Schneidsatz (40, 44) zum Regeln der Förderleistung der Füllmaschine (10) gemessen wird.

3. Vorrichtung zum Herstellen von portionierter Rohwurst, Brühwurst oder dergleichen mit einer vorgebbaren Körnung der Wurstmasse, mit einer von einer Welle getriebenen Förderpumpe, einer die Förderpumpe treibenden Welle und einem Füllrohr, gekennzeichnet durch einen Schneidsatz (40, 44) zwischen dem Auslaß (18) der Förderpumpe (12) und dem Füllrohr (20; 20'), dessen schneidende Elemente mit der die Förderpumpe (12) treibenden Welle (Spindel 14) gekoppelt sind.

4. Vorrichtung nach Anspruch 3 mit einer Vakuum-Füllmaschine, deren Förderpumpe eine Doppelspindelpumpe ist, dadurch gekennzeichnet, daß eine (14) der beiden Spindeln (14, 16) an ihrem druckseitigen Ende einen zentralen Wellenansatz aufweist, der durch den Pumpenauslaß (18) hinausragt und an den Schneidsatz (40, 44) angekoppelt ist.

5. Vorrichtung nach Anspruch 4,
dadurch gekennzeichnet, daß der Schneidsatz (40, 44) in axialer Fortsetzung der einen Spindel (14) der Förderpumpe (12) angeordnet ist.

6. Vorrichtung nach einem der Ansprüche 3 bis 5,
gekennzeichnet durch ein Getriebe zwischen dem Schneidsatz (40, 44) und der die Förderpumpe (12) treibenden Welle (Spindel 14).

7. Vorrichtung nach einem der Ansprüche 3 bis 6,
gekennzeichnet durch einen Drucksensor (80) in der Förderstrecke zwischen Förderpumpe (12) und Schneidsatz (40, 44).

8. Vorrichtung nach Anspruch 7,
gekennzeichnet durch eine Regelungseinrichtung (82), die die vom Drucksensor erfassten Druckwerte empfangt und den Antrieb (42, 50, 14) der Welle (Spindel 14) so regelt, daß die Druckwerte wärend der Wurstherstellung innerhalb eines vorbestimmten Intervalls liegen.

9. Vorrichtung nach Anspruch 8,
dadurch gekennzeichnet, daß die Regelungseinrichtung den Antrieb (42, 50, 14) der Welle (Spindel 14) so regelt, daß die Druckwerte wärend der Wurstherstellung innerhalb eines Intervalls zwischen 1 und 20 bar liegen.

10. Vorrichtung nach Anspruch 9,
dadurch gekennzeichnet, daß die Regelungseinrichtung den Antrieb (42, 50, 14) der Welle (Spindel 14) so regelt, daß die Druckwerte wärend der Wurstherstellung aus Rindfleisch innerhalb eines Intervalls zwischen 15 und 20 bar, wärend der Wurstherstellung aus Schweinefleisch innerhalb eines Intervalls zwischen 11 und 17 bar, und wärend der Wurstherstellung aus Fett innerhalb eines Intervalls zwischen 5 und 8 bar liegen.

11. Vorrichtung nach einem der Ansprüche 3 bis 10 mit einer Vakuum-Füllmaschine, deren Förderpumpe eine Spindelpumpe ist,
dadurch gekennzeichnet, daß der Wurstmassen-Durchsatz der Schneideelemente bei einer vorgegebenen Druckbeaufschlagung der Wurstmasse am Einlaß (52) der Schneideelemente größer ist, als das Drehvolumen der Förderkurven der Förderpumpe (12).

12. Vorrichtung nach einem der Ansprüche 3 bis 11,
dadurch gekennzeichnet, daß die Schneideelemente mindestens zwei, in Förderrichtung beabstandete Lochscheiben () aufweisen, vor und/oder hinter denen jeweils mindestens ein Schneidmesser des Schneidsatzes (40, 44) angeordnet ist.

13. Vorrichtung nach einem der Ansprüche 3 bis 12,
dadurch gekennzeichnet, daß die Förderstrecke zwischen Förderpumpe (12) und Schneidsatz (40, 44) durch einen einerseits an den Auslaß (18) der Förderpumpe (12) und andererseits an den Einlaß (52) der Schneideelemente angeschlossenen Hohlraum mit einem Volumen von ca. 3 bis 8 Litern definiert ist.

14. Vorrichtung nach Anspruch 13,
dadurch gekennzeichnet, daß der Hohlraum aus mindestens zwei, miteinander koppelbaren Abschnitten gebildet ist.

15. Vorrichtung nach einem der Ansprüche 14 oder 15,
gekennzeichnet durch ein zwischen dem Auslaß (18) der Förderpumpe (12) und dem Hohlraum und/oder zwischen dem Einlaß (52) der Schneideelemente und dem Hohlraum koppelbarem Zwischenstück.

## Claims

1. A process for manufacturing portions of raw sausage, sausage for heating in water, or the like, having a predeterminable coarseness of the sausage mass, in which the sausagemeat, the sausage mass or the like is fed into a filling machine, is compressed there by a conveyor pump and, after leaving the conveyor pump (12), is supplied directly to the cutting unit (40, 44) of a mincer and is chopped up by this into the desired final coarseness, and in which the drive (42, 50, 14) of the cutting unit (40, 44) for dividing the sausagemeat, the sausage mass or the like into portions is interrupted analogously to the drive of the conveyor pump (12) of the filling machine (10).

2. A process according to Claim 1, in which the pressure on the sausagemeat, the sausage mass or the like is measured between the filling machine (10) and the cutting unit (40, 44) to regulate the conveying performance of the filling machine (10).

3. A device for manufacturing portions of raw sausage, sausage for heating in water, or the like, having a predeterminable coarseness of the sausage mass, having a conveyor pump driven by a shaft, a shaft driving the conveyor pump and a filling pipe, characterized by a cutting unit (40, 44) between the outlet (18) of the conveyor pump (12) and the filling pipe (20; 20'), whereof of the cutting elements are coupled to the shaft (spindle 14) driving the conveyor pump (12).

4. A device according to Claim 3, having a vacuum filling machine whereof the conveyor pump is a double-spindle pump, characterized in that one (14) of the two spindles (14, 16) has at its delivery side end a central shaft projection which projects out through the pump outlet (18) and is coupled to the cutting unit (40, 44).

5. A device according to Claim 4, characterized in that the cutting unit (40, 44) is arranged in an axial continuation of the one spindle (14) of the conveyor pump (12).

6. A device according to one of Claims 3 to 5, characterized by a gear between the cutting unit (40, 44) and the shaft (spindle 14) driving the conveyor pump (12).

7. A device according to one of Claims 3 to 6, characterized by a pressure sensor (80) in the conveying section between the conveyor pump (12) and the cutting unit (40, 44).

8. A device according to Claim 7, characterized by a regulating device (82) which receives the pressure values detected by the pressure sensor and regulates the drive (42, 50, 14) of the shaft (spindle 14) such that the pressure values are within a predetermined range during manufacture of the sausage.

9. A device according to Claim 8, characterized in that the regulating device regulates the drive (42, 50, 14) of the shaft (spindle 14) such that the pressure values are within a range of between 1 and 20 bar during manufacture of the sausage.

10. A device according to Claim 9, characterized in that the regulating device regulates the drive (42, 50, 14) of the shaft (spindle 14) such that the pressure values are within a range of between 15 and 20 bar during the manufacture of sausages made from beef, within a range of between 11 and 17 bar during the manufacture of sausages made from pork, and within a range of between 5 and 8 bar during the manufacture of sausages made from fat.

11. A device according to one of Claims 3 to 10, having a vacuum filling machine whereof the conveyor pump is a spindle pump, characterized in that the throughput of the sausage mass through the cutting elements when a predetermined pressure acts on the sausage mass at the inlet (52) of the cutting elements is greater than the rotational volume through the conveyor curves of the conveyor pump (12).

12. A device according to one of Claims 3 to 11, characterized in that the cutting elements have at least two perforated plates () [sic] which are spaced in the conveyor direction and upstream and/or downstream of which in each case at least one cutting knife of the cutting unit (40, 44) is arranged.

13. A device according to one of Claims 3 to 12, characterized in that the conveying section between the conveyor pump (12) and the cutting unit (40, 44) is defined by a cavity which is in communication on the one hand with the outlet (18) of the conveyor pump (12) and on the other hand with the inlet (52) of the cutting elements, and has a volume of approximately 3 to 8 litres.

14. A device according to Claim 13, characterized in that the cavity is formed by at least two portions which may be coupled to one another.

15. A device according to Claim 14 or 15, characterized by an intermediate piece which may be coupled between the outlet (18) of the conveyor pump (12) and the cavity and/or between the inlet (52) of the cutting elements and the cavity.

## Revendications

1. Procédé pour la fabrication de saucisse crue, de saucisse à bouillir ou similaire en portions avec une granulométrie de la masse de chair pouvant être prédéterminée, avec lequel la chair à saucisse, la masse de chair ou les composants similaires sont introduits dans une machine de remplissage, puis à cet endroit comprimés par une pompe d'alimentation et, à la sortie de la pompe d'alimentation (12), dirigés directement vers l'élément de coupe (40,44) d'un hache-viande où ils sont broyés à la granulométrie finale souhaitée et avec lequel l'entraînement (42,50,14) de l'élément de coupe (40,44) est interrompu pour réaliser les portions de chair à saucisse, de masse de chair ou de composants similaires, et ceci de la même manière que l'entraînement de la pompe d'alimentation (12) de la machine de remplissage (10).

2. Procédé selon la revendication 1 avec lequel la pression de la chair à saucisse, de la masse de chair ou des composants similaires est mesurée entre la machine de remplissage (10) et l'élément de coupe (40,44) pour la régulation du débit de la machine de remplissage (10).

3. Dispositif pour la fabrication de saucisse crue, de saucisse à bouillir ou similaires en portions avec une granulométrie de la chair à saucisse pouvant être prédéterminée, avec une pompe d'alimentation actionnée par un arbre, un arbre entraînant la pompe d'alimentation et un tube de remplissage, caractérisé par un élément de coupe (40,44) entre la sortie (18) de la pompe d'alimentation (12) et le tube de remplissage (20,20') dont les éléments coupants sont couplés avec l'arbre qui entraîne la pompe d'alimentation (12)(broche hélicoïdale 14).

4. Dispositif selon la revendication 3 avec une machine de remplissage sous vide dont la pompe d'alimentation est une pompe à double broche hélicoïdale, caractérisé en ce que l'une (14) des deux broches hélicoïdales (14, 16) comporte à son extrémité de refoulement un embout central d'arbre qui dépasse dans la sortie de pompe (18) et qui est couplé à l'élément de coupe (40,44).

5. Dispositif selon la revendication 4, caractérisé en ce que l'élément de coupe (40,44) est disposé dans le prolongement axial de l'une des broches hélicoïdales (14) de la pompe d'alimentation (12).

6. Dispositif selon l'une des revendications 3 à 5, caractérisé par un réducteur entre l'élément de coupe (40,44) et l'arbre actionnant la pompe d'alimentation (12) (broche hélicoïdale 14).

7. Dispositif selon l'une des revendications 3 à 6, caractérisé par un capteur de pression (80) dans le trajet d'alimentation entre la pompe d'alimentation (12) et l'élément de coupe (40,44).

8. Dispositif selon la revendication 7, caractérisé par un dispositif de régulation (82) qui reçoit les valeurs de pression saisies par le capteur de pression et qui régule de telle façon l'entraînement (42,50,14) de l'arbre (broche hélicoïdale 14) que les valeurs de pression se situent dans un intervalle prédéterminé lors de la fabrication de la saucisse.

9. Dispositif selon la revendication 8, caractérisé en ce que le dispositif de régulation régule de telle façon l'entraînement (42,50,14) de l'arbre (broche hélicoïdale 14) que les valeurs de pression se situent dans un intervalle entre 1 et 20 bars lors de la fabrication de la saucisse.

10. Dispositif selon la revendication 9, caractérisé en ce que le dispositif de régulation régule de telle façon l'entraînement (42,50,14) de l'arbre (broche hélicoïdale 14) que les valeurs de pression se situent dans un intervalle entre 15 et 20 bars lors de la fabrication de saucisse à base de viande de boeuf, dans un intervalle entre 11 et 17 bars lors de la fabrication de saucisse à base de viande de porc et dans un intervalle entre 5 et 8 bars lors de la fabrication de saucisse à base de graisses.

11. Dispositif selon l'une des revendications 3 à 10, avec une machine de remplissage sous vide dont la pompe d'alimentation est une pompe à broche hélicoïdale, caractérisé en ce que pour une charge de pression donnée de la chair à saucisse à l'entrée (52) des éléments de coupe, le débit de la masse de chair des éléments de coupe est plus important que le volume de rotation des courbes d'alimentation de la pompe d'alimentation (12).

12. Dispositif selon l'une des revendications 3 à 11, caractérisé en ce que les éléments de coupe comportent au moins deux disques ajourés () disposés avec un espacement en direction de l'alimentation devant et/ou derrière lesquels est disposé respectivement au moins un couteau de l'élément de coupe (40,44).

13. Dispositif selon l'une des revendications 3 à 12, caractérisé en ce que le trajet de transport entre la pompe d'alimentation (12) et l'élément de coupe (40,44) est défini par une cavité creuse d'un volume d'environ 3 à 8 titres accolée d'une part à la sortie (18) de la pompe d'alimentation (12) et d'autre part à l'entrée (52) des éléments de coupe.

14. Dispositif selon la revendication 13, caractérisé en ce que la cavité creuse est constituée d'au moins deux sections pouvant être couplées entre elles.

15. Dispositif selon l'une des revendications 13 ou 14, caractérisé par une pièce intermédiaire pouvant être placée entre la sortie (18) de la pompe d'alimentation (12) et la cavité creuse et/ou entre l'entrée (52) des éléments de coupe et la cavité creuse.
